# EUROPÄISCHE PATENTSCHRIFT

(11) **EP 3 009 629 B1**
(45) Veröffentlichungstag und Bekanntmachung des Hinweises auf die Patenterteilung: **06.03.2019**
(21) Anmeldenummer: 14188661.4
(22) Anmeldetag: 13.10.2014
(51) Int. Cl.: F02B 33/42, F02D 41/00, F02D 41/18, F02D 23/00

(54) **Verfahren und Vorrichtung zur Einstellung eines Ladedruckes in einer Brennkraftmaschine mit einem Druckwellenlader**
Method and device for adjusting a charge pressure in a combustion engine having a pressure wave supercharger
Procédé et dispositif de réglage d'une pression de charge dans un moteur à combustion avec un compresseur à ondes de pression

(43) Veröffentlichungstag der Anmeldung: 20.04.2016
(73) Patentinhaber: Antrova AG, 8260 Stein am Rhein (CH)
(72) Erfinder: Skopil, Mario, 8903 Birmensdorf (CH)
(74) Vertreter: Fenner, Seraina

(56) Entgegenhaltungen:
- FR-A3- 2 890 688
- US-A- 4 662 342
- US-A- 4 910 959
- US-A1- 2013 037 008
- US-A1- 2013 206 116

## Beschreibung

Die Erfindung betrifft ein Verfahren zur Einstellung eines Ladedruckes in einer Brennkraftmaschine mit einem Druckwellenlader gemäss dem Oberbegriff von Anspruch 1. Die Erfindung betrifft weiter eine Vorrichtung zur Einstellung eines Ladedruckes in einer Brennkraftmaschine mit einem Druckwellenlader gemäss dem Oberbegriff von Anspruch 9.

### Stand der Technik

Es ist bekannt die Leistung beziehungsweise den Wirkungsgrad einer Brennkraftmaschine durch die Verwendung eines Druckwellenladers zu erhöhen. Der Druckwellenlader verdichtet die angesaugte Frischluft und erhöht dadurch den Ladedruck der Brennkraftmaschine. Die Brennkraftmaschine eines Kraftfahrzeuges wird, ausgehend von einem Kaltstart, während der nachfolgenden Betriebsphase in unterschiedlichen Zuständen betrieben. Es ist daher für einen effizienten Betrieb erforderlich auch den Druckwellenlader an den jeweiligen Ist-Betriebszustand der Brennkraftmaschine anzupassen.

Das Dokument DE 10 2006 020 522 A1 offenbart ein Verfahren zum Betreiben einer Brennkraftmaschine, bei dem Frischluft durch einen Druckwellenlader komprimiert wird. Nachteilig an diesem Druckwellenlader ist die Tatsache, dass zu dessen Steuerung ein Gehäuseversatz erforderlich ist. Das Dokument WO2011/ 100958A1 offenbart ein weiteres Verfahren zur Einstellung eines Ladedrucks einer Brennkraftmaschine mit Hilfe eines Druckwellenladers. Nachteilig an diesem Druckwellenlader ist die Tatsache, dass zu dessen Steuerung eine verstellbare Kulisse im Luftgehäuse erforderlich ist. Beide Verfahren weisen den Nachteil auf, dass diese bei einem Kaltstart sowie bei niedriger Motorlast beziehungswese bei geringem Volumenstrom nicht effizient betreibbar sind, da nur ein zu geringer Druck erzeugbar ist. Zudem weisen die beiden bekannten Druckwellenlader den Nachteil auf, dass konstruktionsbedingt ein relativ grosses Spaltmass zwischen den rotierenden und den feststehenden Bauteilen erforderlich ist, was den Wirkungsgrad zusätzlich reduziert.

Weitere Verfahren und Vorrichtungen der oben genannten Art sind in US4662342, US2013037008 und FR2890688 beschrieben.

### Darstellung der Erfindung

Aufgabe der Erfindung ist es ein Verfahren sowie eine Vorrichtung zur Einstellung eines Ladedruckes in einer Brennkraftmaschine mit einem Druckwellenlader zu bilden, welche bezüglich Emissionsverhalten, Ansprechverhalten und Wirkungsgrad vorteilhafter sind. Das erfindungsgemässe Verfahren beziehungsweise die erfindungsgemässe Vorrichtung sollen insbesondere auch bei kleinen Volumenströmen einen Druck aufstauen können, und sollen zudem einen höheren Wirkungsgrad aufweisen.

Diese Aufgabe wird gelöst mit einem Verfahren zur Einstellung eines Ladedruckes in einer Brennkraftmaschine mit einem Druckwellenlader aufweisend die Merkmale von Anspruch 1. Die Unteransprüche 2 bis 8 betreffen weitere vorteilhafte Verfahrensschritte. Die Aufgabe wird weiter gelöst mit einer Vorrichtung zur Einstellung eines Ladedruckes in einer Brennkraftmaschine mit einem Druckwellenlader aufweisend die Merkmale von Anspruch 9. Die Unteransprüche 10 bis 11 betreffen weitere vorteilhaft ausgestaltete Vorrichtungen.

Die Aufgabe wird insbesondere gelöst mit einem Verfahren zum Einstellen eines Ladedruckes in einer Brennkraftmaschine mit einem Druckwellenlader, wobei der Druckwellenlader einen Zellenrotor aufweist, der pro Umdrehung zumindest zwei Kompressionszyklen durchläuft, wobei ein Hochdruckabgasstrom in einen ersten und einen zweiten Hochdruckabgasteilstrom unterteilt wird, wobei im ersten Kompressionszyklus ein Frischluftstrom sowie der erster Hochdruckabgasteilstrom dem Zellenrotor zugeführt wird und vom Zellenrotor ein erster komprimierter Frischluftstrom und ein Niederdruckabgasstrom abgeführt wird, und wobei im zweiten Kompressionszyklus der Frischluftstrom sowie der zweite Hochdruckabgasteilstrom dem Zellenrotor zugeführt wird und vom Zellenrotor ein zweiter komprimierter Frischluftstrom und der Niederdruckabgasstrom abgeführt wird, wobei der erste und der zweite komprimierten Frischluftstrom zu einer Ladeluft zusammengeführt werden, und wobei die Ladeluft der Brennkraftmaschine zugeführt wird, und wobei die Mengen des ersten und des zweiten Hochdruckabgasteilstroms unabhängig voneinander angesteuert werden, und derart die Menge der Ladeluft angesteuert wird.

Die Aufgabe wird insbesondere weiter gelöst mit einer Vorrichtung zum Einstellen eines Ladedruckes in einer Brennkraftmaschine mit einem Druckwellenlader, wobei der Druckwellenlader einen Zellenrotor, einen Ansaugluftkanal, einen Ladeluftkanal, einen Hochdruckabgaskanal sowie einen Auslasskanal umfasst, wobei der Ansaugluftkanal, der Hochdruckabgaskanal sowie der Ladeluftkanal derart angeordnet sind, dass über den Ansaugluftkanal ein Frischluftstrom und über den Hochdruckabgaskanal ein Hochdruckabgasstrom dem Zellenrotor zuführbar ist, und dass über den Ladeluftkanal eine komprimierte Frischluft aus dem Zellenrotor abführbar ist, wobei der Druckwellenlader derart ausgestaltet ist, dass dieser während einer Umdrehung zumindest einen ersten und einen zweiten Kompressionszyklus ausführt, indem der Ansaugluftkanal in einen ersten und einen zweiten Ansaugluftteilkanal verzweigt, indem der Hochdruckabgaskanal in einen ersten und einen zweiten Hochdruckabgasteilkanal verzweigt, und indem der Ladeluftkanal von einem erste und einem zweiten Ladeluftteilkanal gespeist ist, wobei im zweiten Hochdruckabgasteilkanal ein ansteuerbares Ventil angeordnet ist, um die Menge des durch den zweiten Hochdruckabgasteilkanal fliessenden Hochdruckabgasstroms anzusteuern, wobei im zweiten Luftleitkanal ein Rückschlagventil angeordnet ist, und wobei eine Steuer- und Regelvorrichtung angeordnet ist, welche in Abhängigkeit einer Lastvorgabe, insbesondere eines Gaspedals, das ansteuerbare Ventil betätigt, um dadurch die Menge der der Brennkraftmaschine zugeführten Ladeluft anzusteuern.

Beim erfindungsgemässen Verfahren umfasst der Druckwellenlader zumindest zwei Kompressionszyklen, wobei in zumindest einem der Kompressionszyklen ein Ventil, zum Beispiel ausgestaltet als ein Steuerschieber, angeordnet ist, mit welchem der Hochdruckabgasstrom geöffnet oder geschlossen werden kann, bzw. mit welchem die durchströmende Gasmenge des Hochdruckabgasstroms reguliert werden kann. Die Regulierung des Hochdruckabgasstroms hat zur Folge, dass die vom Druckwellenlader abgegebene Ladeluftmenge reguliert werden kann. Dieses Verfahren weist den Vorteil auf, dass bei einer niedrigen Motorenlast bzw. bei einem geringen Volumenstrom des Abgases der zweite Kompressionszyklus vollständig abgeschaltet bleibt, indem das Ventil während dem zweiten Kompressionszyklus vollständig geschlossen bleibt. Durch das Abschalten des einen Hochdruckabgasstroms sind im Druckwellenlader weniger gasführende Kanäle vorhanden, was den Vorteil ergibt, dass auch bei einem kleinen Volumenstrom ein entsprechender Druck der Ladeluft erzeugbar ist. Das erfindungsgemässe Verfahren weist den Vorteil auf, dass der Druckwellenlader bei einem Kaltstart ein wesentlich besseres Ansprechverhalten aufweist, das heisst, dass der Druckwellenlader beim Kaltstart relativ schnell einen geeigneten Ladedruck aufbauen kann, um die Brennkraftmaschine mit einer unter Druck stehenden Ladeluft zu versorgen beziehungsweise um die Brennkraftmaschine mit höherer Leistung zu betreiben. In einer weiteren vorteilhaften Ausgestaltung weist das Verfahren den Vorteil auf, dass der Druckwellenlader bis etwa zur Hälfte seiner Gesamtkapazität mit einem einzigen Kompressionszyklus gefahren werden kann, und dass der Druckwellenlader bei mehr als der Hälfte der Gesamtkapazität mit zwei Kompressionszyklen gefahren wird, und dass die Drehzahl des Druckwellenlader beim Einschalten des zweiten Kompressionszyklus vorteilhafterweise nur wenig variiert werden muss. Der Druckwellenlader läuft somit grossenteils im oberen Drehzahlbereich, was den Vorteil ergibt, dass verstellbare Kulissen bzw. Steuerkanten, wie diese beispielsweise aus der Druckschrift EP 2562381A1 aus dem Stand der Technik bekannt sind, nicht mehr erforderlich sind.

Das erfindungsgemässe Verfahren erfolgt vorteilhafterweise derart, dass der Druckwellenlader in einem ersten Betriebszustand betrieben wird, bei welchem dem Zellenrotor während dem ersten Kompressionszyklus ein erster Hochdruckabgasteilstrom zugeführt wird und während dem zweiten Kompressionszyklus kein zweiter Hochdruckabgasteilstrom zugeführt wird, dass der Druckwellenlader in einem zweiten Betriebszustand betrieben wird, bei welchem dem Zellenrotor sowohl während dem ersten Kompressionszyklus der erste Hochdruckabgasteilstrom als auch während dem zweiten Kompressionszyklus der zweite Hochdruckabgasteilstrom zugeführt wird, und dass abhängig von einem gemessenen Betriebszustandswert und einem vorgegebenen Sollumschaltwert zwischen dem ersten und dem zweiten Betriebszustand umgeschaltet wird. Als Zustandsgrösse während dem Betrieb des Druckwellenladers ist als gemessener Betriebszustandswert insbesondere die dem Verbrennungsmotor zugeführte Menge der Ladeluft oder der Druck der Ladeluft oder die Motordrehzahl geeignet. Als Sollumschaltwert ist insbesondere ein Wert im Bereich zwischen 40 % bis 50% eines maximal möglichen Betriebszustandswertes geeignet.

Das erfindungsgemässe Verfahren weist den Vorteil auf, dass der aus dem Verbrennungsmotor kommende Hochdruckabgasstrom in besonders vorteilhafter Weise genutzt werden kann, um dem Verbrennungsmotor eine variable, dem jeweiligen Leistungsbereich des Motors angepasste Menge Ladeluft zuzuleiten.

Das erfindungsgemässe Verfahren beziehungsweise die erfindungsgemässe Vorrichtung erfordert einen Druckwellenlader mit zumindest zwei Kompressionszyklen, wobei auch mehr als zwei Kompressionszyklus vorgesehen sein können, wobei zumindest einer der Kompressionszyklen ein ansteuerbares Ventil aufweist, mit welchem der Hochdruckabgasstrom des entsprechenden Kompressionszyklus ansteuerbar und abschaltbar ist, um dadurch die komprimierte Menge des Frischluftstroms anzusteuern und dadurch die Menge und den Druck der Ladeluft anzusteuern.

In einer vorteilhaften Ausgestaltung ist das Ventil in der Lage sowohl den dem Zellenrotor des Druckwellenladers zugeführten Hochdruckabgasteilstrom zu regulieren, als auch die der variablen Gastasche zugeführten Abgasmenge zu regulieren. In einer besonders vorteilhaften Ausgestaltung ist das Ventil als ein Steuerschieber ausgestaltet.

Die Erfindung wird nachfolgend anhand von Beispielen in Detail beschrieben.

### Kurze Beschreibung der Zeichnungen

Die zur Erläuterung der Ausführungsbeispiele verwendeten Zeichnungen zeigen:
- Fig. 1: eine schematische Darstellung einer Brennkraftmaschine mit einem Druckwellenlader;
- Fig. 2: eine Darstellung des vom Druckwellenlader erzeugten Drucks der Ladeluft in Funktion des Volumenstroms;
- Fig. 3: schematisch einen Längsschnitt durch einen Druckwellenlader;
- Fig. 4: einen Schnitt durch ein Ausführungsbeispiel eines Drehschieber;
- Fig. 5: einen Schnitt durch ein Ausführungsbeispiel eines Rückschlagventils;
- Fig. 6: eine perspektivische Ansicht eines Drehteils eines Drehschiebers;
- Fig. 7: eine perspektivische Ansicht einer Aussenhülse für den in Figur 6 dargestellten Drehschieber.

Grundsätzlich sind in den Zeichnungen gleiche Teile mit gleichen Bezugszeichen versehen.

### Wege zur Ausführung der Erfindung

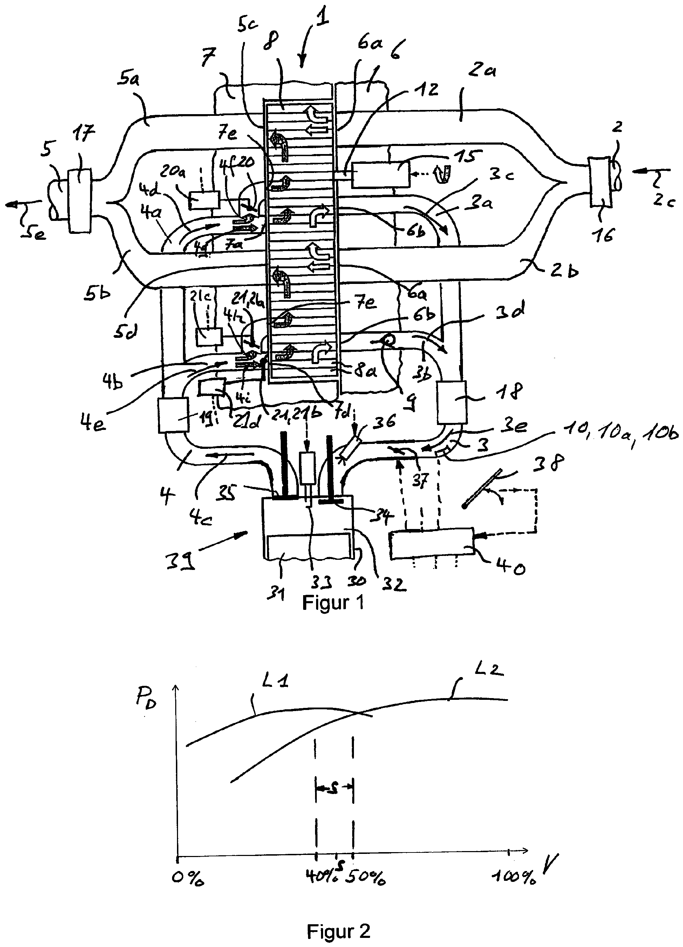

Figur 1 zeigt eine Vorrichtung zum Einstellen eines Ladedruckes in einer Brennkraftmaschine 39. Die Brennkraftmaschine 39 umfasst eine Mehrzahl von Zylindern 30 von welchen in Figur 1 nur ein einziger dargestellt ist. Im Zylinder 30 ist ein Kolben 31 angeordnet. Der Zylinder 30 verfügt über ein Einlassventil 34, ein Auslassventil 35 sowie über eine Zündkerzen 33. Dem Zylinder 30 wird über einen Ladeluftkanal 3 eine Ladeluft 3e zugeführt, wobei der Ladeluft 3e über ein Einspritzventil 36 zudem ein Brennstoff zugemischt wird. Die aus dem Zylinder 30 austretenden Verbrennungsabgase werden als Hochdruckabgasstrom 4c über einen Abgaskanal 4 abgeleitet. Mit zumindest einem Sensor 10, beispielsweise einem Drucksensor 10a zur Messung des Drucks der Ladeluft 3e, oder mit einem Sensor 10b zur Messung der Menge der Ladeluft 3e, beispielsweise einem Hitzdrahtsensor, kann die Steuer- und Regelvorrichtung 40 einen Betriebszustand B der Brennkraftmaschine 39 beziehungsweise des Druckwellenladers 1 messen, oder aus den gemessenen Werten einen Betriebszustand B berechnen.

Figur 1 zeigt zudem einen Druckwellenlader 1 umfassend ein Luftgehäuse 6, ein Gasgehäuse 7, einen darin angeordneten, drehbar gelagerten Zellenrotor 8 sowie eine Mehrzahl von Zuleitungen, Ableitungen und Antrieben. Figur 1 zeigt eine Abwicklung eines Zylinderschnittes über 360° des Zellenrotors 8 und die entsprechenden Zuleitungen, Ableitungen und Antriebe, wobei der Druckwellenlader 1 beziehungsweise der Zellenrotor 8 für zwei Kompressionszyklen pro Umdrehung ausgelegt ist.

Ein Frischluftstrom 2c wird über ein Ansaugluftkanal 2 durch einen Luftfilter 16 geleitet, und anschliessend in zwei Teilströme unterteilt, und über einen ersten Ansaugluftteilkanal 2a und einen zweiten Ansaugluftteilkanal 2b über einen Frischlufteinlass 6a dem Zellenrotor 8 zugeführt. Ein Niederdruckabgas strömt über einen Abgasauslass 5c sowie einen Abgasauslass 5d aus dem Zellenrotor 8, strömt danach durch einen Oxidationskatalysator 17 und einen Auslasskanal 5 und wird danach als sein Niederdruckabgasstrom 5e an die Umwelt abgegeben. Der Hochdruckabgasstrom 4c wird über den Abgaskanal 4 einem Dreiwege-Katalysator 19 zugeleitet, und danach über einen ersten Hochdruckabgasteilkanal 4a sowie einen zweiten Hochdruckabgasteilkanal 4b aufgeteilt in einen ersten Hochdruckabgasteilstrom 4d und einen zweiten Hochdruckabgasteilstrom 4e. Der erste Hochdruckabgasteilstrom 4d wird aufgeteilt in einen ersten Hochdruckabgasteilhauptstrom 4g sowie einen ersten Gastaschenstrom 4f. Der erste Hochdruckabgasteilhauptstrom 4g wird über einen Abgaseinlass 7a dem Zellenrotor 8 zugeleitet und der erste Gastaschenstrom 4f wird einer Gastasche 7e zugeleitet. Über ein erstes Gastaschenventil 20 umfassend einen Gastaschenventilantrieb 20a kann die Menge des ersten Hochdruckabgasteilstroms 4d angesteuert werden, welche als erster Gastaschenstrom 4f der Gastasche 7e zugeleitet wird. Der zweite Hochdruckabgasteilstrom 4b wird aufgeteilt in einen zweiten Hochdruckabgasteilhauptstrom 4i sowie einen zweiten Gastaschenstrom 4h. Der zweite Hochdruckabgasteilhauptstrom 4i wird über ein ansteuerbares Hautgasstromventil 21b einem Abgaseinlass 7d und danach dem Zellenrotor 8 zugeleitet. Der zweite Gastaschenstrom 4h wird einer Gastasche 7e zugeleitet. Über ein zweites Gastaschenventil 21a umfassend einen Gastaschenventilantrieb 21c sowie über das Hauptgasstromventil 21b mit Antrieb 21d kann die Aufteilung des ersten Hochdruckabgasteilstroms 4d in den zweiten Gastaschenstrom 4h sowie den zweiten Hochdruckabgasteilhauptstrom 4i gesteuert werden. Das Hauptgasstromventil 21b und oder das zweite Gastaschenventil 21a kann unterschiedliche Stellungen aufnehmen, und insbesondere auch vollständig geöffnet oder vollständig geschlossen sein. Das Gastaschenventil 21a und das Hauptgasstromventil 21b können auch als ein einziges Ventil 21 ausgestaltet sein, welches sowohl das Gastaschenventil als auch das Hauptgasstromventil ausbildet.

Der über die Frischlufteinlässe 6a in den Zellenrotor 8 einströmende Frischluftstrom 2c wird im Zellenrotor 8 komprimiert und über die Ladeluftauslässe 6b als erster und als zweiter komprimierter Frischluftstrom 3c, 3d mit Hilfe eines ersten Ladeluftteilkanals 3a beziehungsweise eines zweiten Ladeluftteilkanals 3b einem Ladeluftkühler 18 zugeleitet, um anschliessend als Ladeluft 3e dem Zylinder 30 zugeführt zu werden. Im zweiten Ladeluftteilkanal 3b ist ein Rückschlagventil 9 angeordnet. Das Rückschlagventil 9 ist erforderlich, um zu vermeiden dass Ladeluft 3e in den Zellenrotor 8 zurückströmt, insbesondere dann, wenn das Ventil 21 vollständig geschlossen ist.

Der Druckwellenlader 1 umfasst zudem eine Steuer- und Regelvorrichtung 40, welche über Signalleitungen mit einer Lastvorgabe 38, ausgestaltet als ein Gaspedal, sowie mit einer Ladeluftdrosselklappe 37, einem Elektromotor 15 sowie Antrieben 20a, 21c, 21d verbunden ist. Der Elektromotor 15 ist über eine Rotorwelle 12 mit dem Zellenrotor 8 verbunden, um diesen anzutreiben. In einer anderen Ausführung kann der Antrieb des Rotors 8 anstelle vom Elektromotor 15 über ein geeignetes Getriebe durch die Brennkraftmaschine 39 erfolgen.

Das Verfahren zum Einstellen des Ladedruckes in der Brennkraftmaschine 39 mit dem Druckwellenlader 1 erfolgt derart, dass der Zellenrotor 8 pro Umdrehung zwei Kompressionszyklen durchläuft, wobei der Hochdruckabgasstrom 4c in den ersten und den zweiten Hochdruckabgasteilstrom 4d,4e unterteilt wird, wobei im ersten Kompressionszyklus der Frischluftstrom 2c sowie der erste Hochdruckabgasteilstrom 4d dem Zellenrotor 8 zugeführt wird, und vom Zellenrotor 8 der erste komprimierte Frischluftstrom 3c und der Niederdruckabgasstrom 5e abgeführt wird, und wobei im zweiten Kompressionszyklus der Frischluftstrom 2c sowie der zweite Hochdruckabgasteilstrom 4e dem Zellenrotor 8 zugeführt wird, und vom Zellenrotor 8 der zweite komprimierte Frischluftstrom 3d und der Niederdruckabgasstrom 5e abgeführt wird, wobei der erste und der zweite komprimierten Frischluftstrom 3c, 3d zu einer Ladeluft 3e zusammengeführt werden, und wobei die Ladeluft 3e der Brennkraftmaschine 39 zugeführt wird. Die Menge des ersten und des zweiten Hochdruckabgasteilstroms 4d, 4e werden unabhängig voneinander angesteuert, um dadurch die erforderliche Menge der Ladeluft 3e zu erzeugen.

Figur 2 zeigt den Volumenstrom V der Ladeluft 3e beziehungsweise die Ladeluftmenge in Funktion eines Druckverhältnisses P der Ladeluft 3e. Der Volumenstrom V ist in % eines maximalen Volumenstroms angegeben, der in einer jeweiligen Kombination von Brennkraftmaschine 39 und Druckwellenlader 1 maximal möglich ist. Das Druckverhältnis P_{D} ist der Quotient aus dem Ladeluftdruck P der Ladeluft 3e und dem Umgebungsdruck. In einem unteren Leistungsbereich L1 benötigt die Brennkraftmaschine 39 nur eine beschränkte Menge Ladeluft 3e. Der Brennkraftmaschine 39 kann eine maximale Ladeluftmenge L_{Max} zugeführt werden. Bei einer aktuell zugeführten Ladeluftmenge 3e von weniger als etwas 40% bis 50% der maximalen Ladeluftmenge L_{Max} wird dem Zellenrotor 8 während dem ersten Kompressionszyklus der erste Hochdruckabgasteilstrom 4d zugeführt, wogegen während dem zweiten Kompressionszyklus kein zweiter Hochdruckabgasteilstrom 4e zugeführt wird, indem das Hauptgasstromventil 21b und das zweite Gastaschenventil 21a vollständig geschlossen ist. Sobald die Brennkraftmaschine 39 in einem oberen Leistungsbereich L2 betrieben wird, benötigt diese eine grössere Menge Ladeluft 3e. In diesem Betriebszustand wird der Druckwellenlader entsprechend der Kurve L2 betrieben, und dem Zellenrotor 8 wird sowohl während dem ersten Kompressionszyklus der erste Hochdruckabgasteilstrom 4d als auch während dem zweiten Kompressionszyklus der zweite Hochdruckabgasteilstrom 4e zugeführt, indem während dem zweiten Kompressionszyklus das Hauptgasstromventil 21b und falls erforderlich auch das zweite Gastaschenventil 21a zumindest teilweise geöffnet wird.

Der Druckwellenlader 1 könnte im unteren Leistungsbereich L1 auch derart betrieben werden, dass sowohl während dem ersten Kompressionszyklus der erste Hochdruckabgasteilstrom 4d zugeführt wird als auch während dem zweiten Kompressionszyklus der zweite Hochdruckabgasteilstrom 4e zugeführt wird, indem beide Hochdruckabgasteilströme 4d über ein getrennt ansteuerbares Hauptgasstromventil und allenfalls zusätzlich über ein Gastaschenventil ansteuerbar sind.

In einem bevorzugten Verfahren wird der Druckwellenlader 1 in einem ersten Betriebszustand L1 betrieben, bei welchem dem Zellenrotor 8 während dem ersten Kompressionszyklus der erste Hochdruckabgasteilstrom 4d zugeführt wird und während dem zweiten Kompressionszyklus kein zweiter Hochdruckabgasteilstrom 4e zugeführt wird, und der Druckwellenlader 1 wird in einem zweiten Betriebszustand L2 betrieben, bei welchem dem Zellenrotor 8 sowohl während dem ersten Kompressionszyklus der erste Hochdruckabgasteilstrom 4d als auch während dem zweiten Kompressionszyklus der zweite Hochdruckabgasteilstrom 4e zugeführt wird, und dass abhängig von dem gemessenen Betriebszustandswert B und einem vorgegebenen Sollumschaltwert S zwischen dem ersten und dem zweiten Betriebszustand L1, L2 umgeschaltet wird.

Als Betriebszustandswert B wird vorzugsweise der Wert der zugeführten Menge der Ladeluft 3e oder der Ladeluftdrucks P der Ladeluft 3e oder die Motordrehzahl U der Brennkraftmaschine verwendet. Als Sollumschaltwert S wird vorzugsweise ein dem Betriebszustandswert entsprechender Referenzwert vorgegeben. Der Sollumschaltwert S wird beispielsweise derart gewählt, dass der Brennkraftmaschine 39 eine maximale Ladeluftmenge L_{Max} zugeführt werden kann, und dass der Sollumschaltwert S ein Wert im Bereich von 40% bis 50% der maximalen Ladeluftmenge L_{Max} ist. Der Sollumschaltwert S kann beispielsweise auch derart gewählt sein, dass die der Brennkraftmaschine 39 zugeführte Ladeluft 3e einen maximalen Ladeluftdruck P_{Max} aufweisen kann, und dass der Sollumschaltwert S ein Wert im Bereich von 40% bis 50% des maximalen Ladeluftdrucks P_{Max} ist, beispielsweise 40% oder 45% oder 50%.

Bei einer aktuell zugeführten Ladeluftmenge 3e von mehr als einem vorgegebenen Sollumschaltwert S, vorzugsweise 40% bis 50% der maximalen Ladeluftmenge L_{Max}, wird dem Zellenrotor 8 im zweiten Betriebszustand L2 sowohl während dem ersten Kompressionszyklus der erste Hochdruckabgasteilstrom 4d zugeführt, als auch während dem zweiten Kompressionszyklus der zweite Hochdruckabgasteilstrom 4e zugeführt, indem das Hauptgasstromventil 21b und gegebenenfalls auch das zweite Gastaschenventil 21a geöffnet wird. Das Umschalten zwischen den beiden Betriebszuständen L1, L2 erfolgt, wie in Figur 2 dargestellt, vorzugsweise innerhalb eines Bereichs S, wobei der Bereich S im dargestellten Ausführungsbeispiel eine Breite von 10% aufweist. Vorteilhafterweise wird für das Umschalten zwischen den beiden Betriebsarten ein Sollumschaltwert S vorgegeben, beispielsweise 40% oder 45% oder 50%, bei dessen Überschreiten, ausgehend von tiefen Werten, zur Betriebsart L2 gewechselt wird, bei welcher sowohl während dem ersten Kompressionszyklus als auch während dem zweiten Kompressionszyklus der erste bzw. der zweite Hochdruckabgasteilstrom 3d, 4e zugeführt, wird, und bei dessen Unterschreiten, ausgehend von hohen Werten, zur Betriebsart L1 gewechselt wird, bei welcher nur während dem ersten Kompressionszyklus der erste Hochdruckabgasteilstrom 3d, 4e zugeführt wird.

Wie aus Figur 2 ersichtlich weist das erfindungsgemässe Verfahren den Vorteil auf, dass der Druck der Ladeluft 3e im Bereich der Kurve L1, das heisst bei einem kleinerem Volumenstrom, relativ hoch ist.

Der in Figur 1 dargestellte Druckwellenlader 1 kann auch derart ausgestaltet sein, dass dieser mehr als zwei Kompressionszyklen umfasst, beispielsweise 3, 4, 5 oder 6 Kompressionszyklen, wobei zumindest ein Hochdruckabgasteilstrom 4e unabhängig von den weiteren Hochdruckabgasteilströmen 4d ansteuerbar sein muss, um den in den Figuren 1 und 2 beschriebenen Effekt zu erzielen.

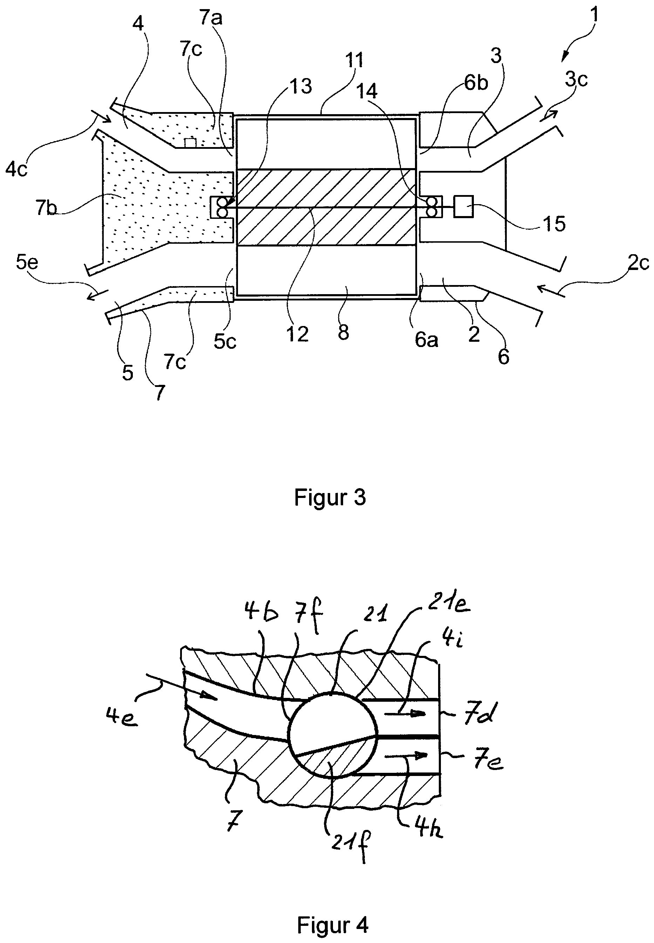

Figur 3 zeigt in einem Längsschnitt einen besonders vorteilhaft ausgestalteten Druckwellenlader 1, umfassend ein Luftgehäuse 6, einen Zellenrotor 8 mit einem diesen umgebenden Rotorgehäuse 11 sowie ein Gasgehäuse 7. Der Zellenrotor 8 ist über eine Rotorwelle 12 beidseitig in je einem Lager 13, 14 gelagert und von einem Elektromotor 15 oder über ein Getriebe angetrieben. Der Frischluftstrom 2c wird über den Ansaugluftkanal 2 zugeführt, im Zellenrotor 8 komprimiert und über den Ladeluftkanal 3 als komprimierter Frischluftstrom 3c wieder abgeführt. Der Hochdruckabgasstrom 4c wird über den Abgaskanal 4 dem Zellenrotor 8 zugeführt und wird über den Auslasskanal 5 als Niederdruckabgasstrom 5e wieder abgeführt. Das Gasgehäuse 7 umfasst eine Wasserkühlung 7b, 7c, was den Vorteil ergibt, dass die Temperaturen des Gasgehäuses 7 reduziert sind. Dies ermöglicht es, trotz den hohen Temperaturen des Hochdruckabgasstroms 4c ein zuverlässig funktionierendes Ventil 21 im Gasgehäuse 7 einzubauen.

Figur 4 zeigt schematisch ein im Gasgehäuse 7 angeordnetes Ventil 21. Der zweite Hochdruckabgasteilstrom 4e wird über einen zweiten Hochdruckabgasteilkanal 4b dem Ventil 21 zugeleitet und wird als zweiter Hochdruckabgasteilhauptstrom 4i über den Abgaseinlass 7d dem Zellenrotor 8 zugeleitet. Zudem wird, abhängig von der Stellung des Ventils 21, ein zweiter Gastaschenstrom 4h einer Gastasche 7e zugeleitet. In einer vorteilhaften Ausgestaltung umfasst das Ventil 21 eine Hülse 21e, in welcher ein Drehschieber 21f drehbar gelagert ist. Die Hülse 21e besteht vorzugsweise aus Stahl und ist vorteilhafterweise im Gasgehäuse 7 angeordnet.

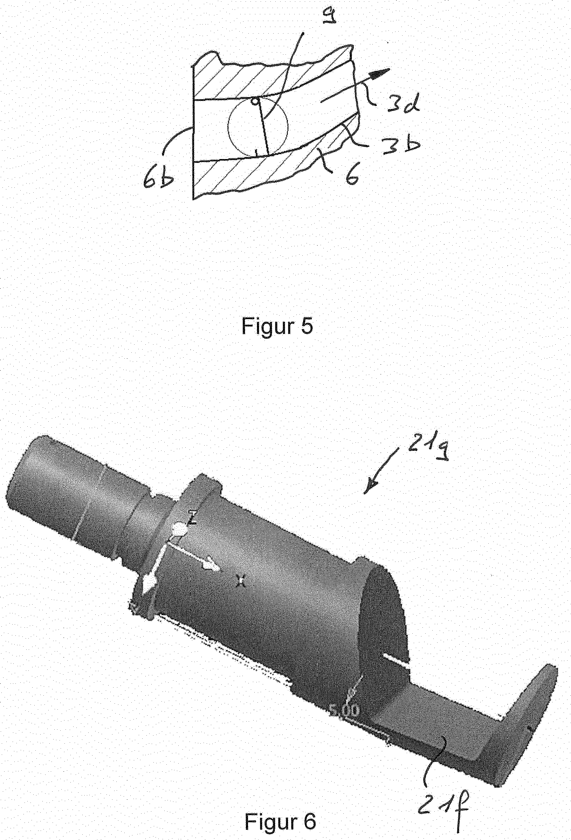

Figur 5 zeigt beispielhaft ein Rückschlagventil 9 welches im Luftgehäuse 6 im zweiten Ladeluftteilkanal 3b angeordnet ist, und ein Rückfliessen des zweiten komprimierten Frischluftstroms 3d in den Ladeluftauslass 6b beziehungsweise in den Zellenrotor 8 verhindert.

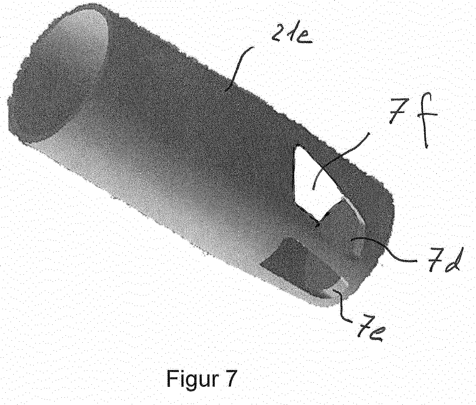

Die Figuren 6 und 7 zeigen ein Ausführungsbeispiel eines Ventils 21 umfassend eine Stahlhülse 21e sowie ein darin drehbar gelagertes Ventilteil 21g. Die Hülse 21e umfasst eine Eintrittsöffnung 7f sowie Auslassöffnungen 7d, 7e. Das drehbare Ventilteil 21g umfasst einen Drehschieber 21f, wobei das drehbare Ventilteil 21g drehbar in der Hülse 21e gelagert ist, derart, dass der Drehschieber 21f die Auslassöffnungen 7d, 7e in Abhängigkeit von dessen Stellung teilweise oder vollständig bedecken kann oder vollständig öffnen kann.

## Patentansprüche

1. Verfahren zum Einstellen eines Ladedruckes in einer Brennkraftmaschine (39) mit einem Druckwellenlader (1), wobei der Druckwellenlader (1) einen Zellenrotor (8) aufweist, der pro Umdrehung zumindest zwei Kompressionszyklen durchläuft, wobei in zumindest einem der Kompressionszyklen ein Ventil angeordnet ist, mit welchem der Hochdruckabgasstrom geöffnet oder geschlossen werden kann, bzw. mit welchem die durchströmende Gasmenge des Hochdruckabgasstroms reguliert werden kann, wobei ein Hochdruckabgasstrom (4c) in einen ersten und einen zweiten Hochdruckabgasteilstrom (4d,4e) unterteilt wird, wobei im ersten Kompressionszyklus ein Frischluftstrom (2c) sowie der erste Hochdruckabgasteilstrom (4d) dem Zellenrotor (8) zugeführt wird und vom Zellenrotor (8) ein erster komprimierter Frischluftstrom (3c) und ein Niederdruckabgasstrom (5e) abgeführt wird, und wobei im zweiten Kompressionszyklus der Frischluftstrom (2c) sowie der zweite Hochdruckabgasteilstrom (4e) dem Zellenrotor (8) zugeführt wird und vom Zellenrotor (8) ein zweiter komprimierter Frischluftstrom (3d), wobei im zweiten Ladeluftteilkanal (3b) ein Rückschlagventil (9) angeordnet ist um zu vermeiden, dass die Ladeluft (3e) in den Zellenrotor (8) zurückströmt und der Niederdruckabgasstrom (5e) abgeführt wird, wobei der erste und der zweite komprimierten Frischluftstrom (3c, 3d) zu einer Ladeluft (3e) zusammengeführt werden, und wobei die Ladeluft (3e) der Brennkraftmaschine (39) zugeführt wird, **dadurch gekennzeichnet, dass** die Mengen des ersten und des zweiten Hochdruckabgasteilstroms (4d,4e) unabhängig voneinander angesteuert werden, und derart die Menge der Ladeluft (3e) angesteuert wird, wobei der Druckwellenlader (1) in einem ersten Betriebszustand (L1) betrieben wird, bei welchem dem Zellenrotor (8) während dem ersten Kompressionszyklus der erste Hochdruckabgasteilstrom (4d) zugeführt wird und während dem zweiten Kompressionszyklus kein zweiter Hochdruckabgasteilstrom (4e) zugeführt wird, wobei der Druckwellenlader (1) in einem zweiten Betriebszustand (L2) betrieben wird, bei welchem dem Zellenrotor (8) sowohl während dem ersten Kompressionszyklus der erste Hochdruckabgasteilstrom (4d) als auch während dem zweiten Kompressionszyklus der zweite Hochdruckabgasteilstrom (4e) zugeführt wird, und dass abhängig von einem gemessenen Betriebszustandswert (B) und einem vorgegebenen Sollumschaltwert (S) zwischen dem ersten und dem zweiten Betriebszustand (L1, L2) umgeschaltet wird.

2. Verfahren nach Anspruch 1, **dadurch gekennzeichnet, dass** der Betriebszustandswert (B) der Wert der zugeführten Menge der Ladeluft (3e) oder des Ladeluftdrucks (P) oder der Motordrehzahl (U) ist, und dass der Sollumschaltwert (S) ein vorgegebener, dem Betriebszustandswert entsprechender Referenzwert ist.

3. Verfahren nach Anspruch 2, **dadurch gekennzeichnet, dass** der Brennkraftmaschine (39) eine maximale Ladeluftmenge L_{Max} zugeführt werden kann, und dass der Sollumschaltwert (S) ein Wert im Bereich von 40% bis 50% der maximalen Ladeluftmenge L_{Max} ist.

4. Verfahren nach Anspruch 2, **dadurch gekennzeichnet, dass** die der Brennkraftmaschine (39) zugeführten Ladeluft (3e) einen maximalen Ladeluftdruck P_{Max} aufweisen kann, und dass der Sollumschaltwert (S) ein Wert im Bereich von 40% bis 50% des maximalen Ladeluftdrucks P_{Max} ist.

5. Verfahren nach einem der vorhergehenden Ansprüche, **dadurch gekennzeichnet, dass** der erste Hochdruckabgasteilstrom (4d) während dem ersten Kompressionszyklus ungesteuert dem Zellenrotor (8a) zugeführt wird, und dass der zweite Hochdruckabgasteilstrom (4c) während dem zweiten Kompressionszyklus über ein Ventil (21) gesteuert dem Zellenrotor (8) zugeführt wird.

6. Verfahren nach Anspruch 1, **dadurch gekennzeichnet**, der erste Hochdruckabgasteilstrom (4d) in einen ersten Gastaschenstrom (4f) und einen ersten Hochdruckabgasteilhauptstrom (4g) unterteilt wird, und dass der erste Gastaschenstrom (4f) in Abhängigkeit der erforderlichen Menge Ladeluft (3e) angesteuert wird.

7. Verfahren nach Anspruch 1, **dadurch gekennzeichnet**, der zweite Hochdruckabgasteilstrom (4e) in einen zweiten Gastaschenstrom (4h) und einen zweiten Hochdruckabgasteilhauptstrom (4i) unterteilt wird, und dass der zweite Gastaschenstrom (4h) und/oder der zweite Hochdruckabgasteilhauptstrom (4i) in Abhängigkeit der erforderlichen Menge Ladeluft (3e) angesteuert wird.

8. Verfahren nach Anspruch 1, **dadurch gekennzeichnet, dass** die Drehzahl des Zellenrotors (8) reduziert wird, wenn der Druckwellenlader (1) im zweiten Betriebszustand (L2) betrieben wird, und dass die Drehzahl des Zellenrotors (8) erhöht wird, wenn der Druckwellenlader (1) im ersten Betriebszustand (L1) betrieben wird.

9. Vorrichtung zum Einstellen eines Ladedruckes in einer Brennkraftmaschine (39) mit einem Druckwellenlader (1), wobei der Druckwellenlader (1) einen Zellenrotor (8), einen Ansaugluftkanal (2), einen Ladeluftkanal (3), einen Hochdruckabgaskanal (4) sowie einen Auslasskanal (5) umfasst, wobei der Ansaugluftkanal (2), der Hochdruckabgaskanal (4) sowie der Ladeluftkanal (3) derart angeordnet sind, dass über den Ansaugluftkanal (2) ein Frischluftstrom (2c) und über den Hochdruckabgaskanal (4) ein Hochdruckabgasstrom (4c) dem Zellenrotor (8) zuführbar ist, und dass über den Ladeluftkanal (3) eine komprimierte Frischluft aus dem Zellenrotor (8) abführbar ist, wobei der Druckwellenlader (1) derart ausgestaltet ist, dass dieser während einer Umdrehung zumindest einen ersten und einen zweiten Kompressionszyklus ausführt, indem der Ansaugluftkanal (2) in einen ersten und einen zweiten Ansaugluftteilkanal (2a,2b) verzweigt, indem der Hochdruckabgaskanal (4) in einen ersten und einen zweiten Hochdruckabgasteilkanal (4a,4b) verzweigt, und indem der Ladeluftkanal (3) von einem erste und einem zweiten Ladeluftteilkanal (3a, 3b) gespeist ist, **dadurch gekennzeichnet,**
- **dass** im zweiten Hochdruckabgasteilkanal (4b) ein ansteuerbares Ventil (21) angeordnet ist, um die Menge des durch den zweiten Hochdruckabgasteilkanal (4b) fliessenden Hochdruckabgasstroms (4c) anzusteuern,
- **dass** im zweiten Luftleitkanal (3b) ein Rückschlagventil (9) angeordnet ist, und
- **dass** eine Steuer- und Regelvorrichtung (40) angeordnet ist, welche in Abhängigkeit einer Lastvorgabe (38), insbesondere eine Gaspedals, das ansteuerbare Ventil (21) betätigt, um dadurch die Menge der der Brennkraftmaschine (39) zugeführten Ladeluft (3e) anzusteuern wobei der Druckwellenlader (1) in einem ersten Betriebszustand (L1) betrieben werden kann, bei welchem dem Zellenrotor (8) während dem ersten Kompressionszyklus der erste Hochdruckabgasteilstrom (4d) zugeführt wird und während dem zweiten Kompressionszyklus kein zweiter Hochdruckabgasteilstrom (4e) zugeführt wird, dass der Druckwellenlader (1) in einem zweiten Betriebszustand (L2) betrieben werden kann, bei welchem dem Zellenrotor (8) sowohl während dem ersten Kompressionszyklus der erste Hochdruckabgasteilstrom (4d) als auch während dem zweiten Kompressionszyklus der zweite Hochdruckabgasteilstrom (4e) zugeführt wird, und dass abhängig von einem gemessenen Betriebszustandswert (B) und einem vorgegebenen Sollumschaltwert (S) zwischen dem ersten und dem zweiten Betriebszustand (L1, L2) umgeschaltet werden kann.

10. Vorrichtung nach Anspruch 9, **dadurch gekennzeichnet, dass** das ansteuerbare Ventil (21) als ein Drehschieberventil ausgestaltet ist.

11. Vorrichtung nach Anspruch 10, **dadurch gekennzeichnet, dass** das Ventil (21) zwei Teilventile umfasst, ein erstes Teilventil (21a) dessen nachfolgender Fluidleitkanal in eine Gastasche mündet, und ein zweites Teilventil (21b), dessen nachfolgender Fluidleitkanal in einen Hauptkanal (8a) des Zellenrotors (8) mündet.

## Claims

1. Method for adjusting a charging pressure in an internal combustion engine (39) having a pressure-wave supercharger (1), wherein the pressure-wave supercharger (1) has a cell rotor (8), which passes through at least two compression cycles per revolution, wherein a valve, by means of which the high-pressure exhaust-gas flow can be opened or closed, or by means of which the gas quantity flowing through the high pressure exhaust-gas flow can be regulated, is arranged in at least one of the compression cycles, wherein a high-pressure exhaust-gas flow (4c) is divided into a first and a second high-pressure exhaust-gas partial flow (4d, 4e), wherein a fresh-air flow (2c) and the first high-pressure exhaust-gas partial flow (4d) are fed to the cell rotor (8) and a first compressed fresh-air flow (3c) and a low-pressure exhaust-gas flow (5e) are led away from the cell rotor (8) in the first compression cycle, and wherein the fresh-air flow (2c) and the second high-pressure exhaust-gas partial flow (4e) are fed to the cell rotor (8) and a second compressed fresh-air flow (3d), wherein a check valve (9) is arranged in the second charging-air subduct (3b) to avoid the charging air (3e) flowing back into the cell rotor (8), and the low-pressure exhaust-gas flow (5e) are led away from the cell rotor (8) in the second compression cycle, wherein the first and the second compressed fresh-air flow (3c, 3d) are combined into a charging air (3e), and wherein the charging air (3e) is fed to the internal combustion engine (39),
**characterized**
**in that** the quantities of the first and of the second high-pressure exhaust-gas partial flow (4d, 4e) are controlled independently of one another, and the quantity of the charging air (3e) is controlled in this way, wherein the pressure-wave supercharger (1) is operated in a first operating state (L1), in which the first high-pressure exhaust-gas partial flow (4d) is fed to the cell rotor (8) during the first compression cycle and no second high-pressure exhaust-gas partial flow (4e) is fed to the cell rotor (8) during the second compression cycle, wherein the pressure-wave supercharger (1) is operated in a second operating state (L2), in which it is the case both that the first high-pressure exhaust-gas partial flow (4d) is fed to the cell rotor (8) during the first compression cycle and that the second high-pressure exhaust-gas partial flow (4e) is fed to the cell rotor (8) during the second compression cycle, and in that a switch is made between the first and the second operating state (L1, L2), depending on a measured operating state value (B) and a predetermined setpoint switchover value (S).

2. Method according to Claim 1, **characterized in that** the operating state value (B) is the value of the supplied quantity of charging air (3e) or of the charging air pressure (P) or of the engine speed (U), and **in that** the setpoint switchover value (S) is a predetermined reference value corresponding to the operating state value.

3. Method according to Claim 2, **characterized in that** a maximum charging air quantity L_{Max} can be fed to the internal combustion engine (39), and **in that** the setpoint switchover value (S) is a value in a range of from 40% to 50% of the maximum charging air quantity L_{Max}.

4. Method according to Claim 2, **characterized in that** the charging air (3e) fed to the internal combustion engine (39) can have a maximum charging air pressure P_{Max}, and **in that** the setpoint switchover value (S) is a value in a range of from 40% to 50% of the maximum charging air pressure P_{Max}.

5. Method according to one of the preceding claims, **characterized in that** the first high-pressure exhaust-gas partial flow (4d) is fed to the cell rotor (8) in an uncontrolled manner during the first compression cycle, and **in that** the second high-pressure exhaust-gas partial flow (4c) is fed to the cell rotor (8) in a manner controlled by a valve (21) during the second compression cycle.

6. Method according to Claim 1, **characterized in that** the first high-pressure exhaust-gas partial flow (4d) is divided into a first gas-pocket flow (4f) and a first high-pressure exhaust-gas partial flow (4g), and **in that** the first gas-pocket flow (4f) is controlled in accordance with the required quantity of charging air (3e).

7. Method according to Claim 1, **characterized in that** the second high-pressure exhaust-gas partial flow (4e) is divided into a second gas-pocket flow (4h) and a second high-pressure exhaust-gas partial flow (4i), and **in that** the second gas-pocket flow (4h) and/or the second high-pressure exhaust-gas partial flow (4i) is controlled in accordance with the required quantity of charging air (3e).

8. Method according to Claim 1, **characterized in that** the speed of the cell rotor (8) is reduced when the pressure-wave supercharger (1) is being operated in the second operating state (L2), and **in that** the speed of the cell rotor (8) is increased when the pressure-wave supercharger (1) is being operated in the first operating state (L1).

9. Device for adjusting a charging pressure in an internal combustion engine (39) having a pressure-wave supercharger (1), wherein the pressure-wave supercharger (1) has a cell rotor (8), an intake-air duct (2), a charging-air duct (3), a high-pressure exhaust-gas duct (4) and an outlet duct (5), wherein the intake-air duct (2), the high-pressure exhaust-gas duct (4) and the charging-air duct (3) are arranged in such a way that a fresh-air flow (2c) can be fed to the cell rotor (8) via the intake-air duct (2) and a high-pressure exhaust-gas flow (4c) can be fed to the cell rotor (8) via the high-pressure exhaust-gas duct (4), and that a compressed fresh air can be discharged from the cell rotor (8) via the charging-air duct (3), wherein the pressure-wave supercharger (1) is designed in such a way that it performs at least one first and one second compression cycle during one revolution inasmuch as the intake-air duct (2) branches into a first and a second intake-air subduct (2a, 2b), inasmuch as the high-pressure exhaust-gas duct (4) branches into a first and a second high-pressure exhaust-gas subduct (4a, 4b), and inasmuch as the charging-air duct (3) is supplied by a first and a second charging-air subduct (3a, 3b), **characterized**
- **in that** a controllable valve (21) is arranged in the second high-pressure exhaust-gas subduct (4b) in order to control the quantity of the high-pressure exhaust-gas flow (4c) flowing through the second high-pressure exhaust-gas subduct (4b),
- **in that** a check valve (9) is arranged in the second air-guiding duct (3b), and
- **in that** an open-loop and closed-loop control device (40) is provided, which actuates the controllable valve (21) in accordance with a load input (38), in particular of a gas pedal, in order thereby to control the quantity of the charging air (3e) fed to the internal combustion engine (39), wherein the pressure-wave supercharger (1) can be operated in a first operating state (L1), in which the first high-pressure exhaust-gas partial flow (4d) is fed to the cell rotor (8) during the first compression cycle and no second high-pressure exhaust-gas partial flow (4e) is fed to the cell rotor (8) during the second compression cycle, in that the pressure-wave supercharger (1) can be operated in a second operating state (L2), in which it is the case both that the first high-pressure exhaust-gas partial flow (4d) is fed to the cell rotor (8) during the first compression cycle and that the second high-pressure exhaust-gas partial flow (4e) is fed to the cell rotor (8) during the second compression cycle, and in that a switch can be made between the first and the second operating state (L1, L2), depending on a measured operating state value (B) and a predetermined setpoint switchover value (S).

10. Device according to Claim 9, **characterized in that** the controllable valve (21) is designed as a rotary slide valve.

11. Device according to Claim 10, **characterized in that** the valve (21) comprises two partial valves, a first partial valve (21a), the downstream fluid-guiding duct of which opens into a gas pocket, and a second partial valve (21b), the downstream fluid-guiding duct of which opens into a main duct (8a) of the cell rotor (8).

## Revendications

1. Procédé de réglage d'une pression de suralimentation dans un moteur à combustion interne (39) avec un turbocompresseur à ondes de pression (1), dans lequel le turbocompresseur à ondes de pression (1) présente un rotor à cellules (8), qui traverse au moins deux cycles de compression par tour, dans lequel une soupape est disposée dans au moins un des cycles de compression, avec laquelle le courant de gaz d'échappement à haute pression peut être ouvert ou fermé, ou avec laquelle le débit de gaz en circulation du courant de gaz d'échappement à haute pression peut être régulé, dans lequel on divise un courant de gaz d'échappement à haute pression (4c) en un premier et un second courants partiels de gaz d'échappement à haute pression (4d, 4e), dans lequel on envoie dans le premier cycle de compression un courant d'air frais (2c) ainsi que le premier courant partiel de gaz d'échappement à haute pression (4d) au rotor à cellules (8) et on évacue du rotor à cellules (8) un premier courant d'air frais comprimé (3c) et un courant de gaz d'échappement à basse pression (5e), et dans lequel dans le second cycle de compression on envoie le courant d'air frais (2c) et le second courant partiel de gaz d'échappement à haute pression (4e) au rotor à cellules (8) et on évacue du rotor à cellules (8) un second courant d'air frais comprimé (3d), dans lequel un clapet anti-retour (9) est disposé dans le second canal partiel d'air de suralimentation (3b) afin d'éviter que l'air de suralimentation (3e) refoule dans le rotor à cellules (8) et on évacue le courant de gaz d'échappement à basse pression (5e), dans lequel on réunit le premier et le second courants d'air frais comprimé (3c, 3d) en un air de suralimentation (3e), et dans lequel on envoie l'air de suralimentation (3e) au moteur à combustion interne (39),
**caractérisé en ce que** l'on commande les débits du premier et du second courants partiels de gaz d'échappement à haute pression (4d, 4e) indépendamment l'un de l'autre et on commande ainsi le débit de l'air de suralimentation (3e), dans lequel on fait fonctionner le turbocompresseur à ondes de pression (1) dans un premier état de fonctionnement (L1), dans lequel on envoie au rotor à cellules (8) pendant le premier cycle de compression le premier courant partiel de gaz d'échappement à haute pression (4d) et pas de second courant partiel de gaz d'échappement à haute pression (4e) pendant le second cycle de compression, dans lequel on fait fonctionner le turbocompresseur à ondes de pression (1) dans un second état de fonctionnement (L2), dans lequel on envoie au rotor à cellules (8) aussi bien pendant le premier cycle de compression le premier courant partiel de gaz d'échappement à haute pression (4d) que pendant le second cycle de compression le second courant partiel de gaz d'échappement à haute pression (4e), et **en ce que** l'on commute entre le premier et le second états de fonctionnement (L1, L2) en fonction d'une valeur d'état de fonctionnement mesurée (B) et d'une valeur de commutation de consigne prédéterminée (S).

2. Procédé selon la revendication 1, **caractérisé en ce que** la valeur d'état de fonctionnement (B) est la valeur du débit d'air de suralimentation (3e) envoyé ou de la pression d'air de suralimentation (P) ou le nombre de tours (U) du moteur, et **en ce que** la valeur de commutation de consigne (S) est une valeur de référence prédéterminée correspondant à la valeur d'état de fonctionnement.

3. Procédé selon la revendication 2, **caractérisé en ce que** l'on peut envoyer au moteur à combustion interne (39) un débit d'air de suralimentation maximal Lₘₐₓ, et **en ce que** la valeur de commutation de consigne (S) est une valeur située dans la plage de 40 % à 50 % du débit d'air de suralimentation maximal Lₘₐₓ.

4. Procédé selon la revendication 2, **caractérisé en ce que** l'air de suralimentation (3e) envoyé au moteur à combustion interne (39) peut présenter une pression d'air de suralimentation maximale Pₘₐₓ, et **en ce que** la valeur de commutation de consigne (S) est une valeur située dans la plage de 40 % à 50 % de la pression d'air de suralimentation maximale Pₘₐₓ.

5. Procédé selon l'une quelconque des revendications précédentes, **caractérisé en ce que** l'on envoie le premier courant partiel de gaz d'échappement à haute pression (4d) pendant le premier cycle de compression de façon non commandée au rotor à cellules (8), et **en ce que** l'on envoie le second courant partiel de gaz d'échappement à haute pression (4c) pendant le second cycle de compression de façon commandée par une soupape (21) au rotor à cellules (8).

6. Procédé selon la revendication 1, **caractérisé en ce que** l'on divise le premier courant partiel de gaz d'échappement à haute pression (4d) en un premier courant de poche de gaz (4f) et un premier courant principal partiel de gaz d'échappement à haute pression (4g), et **en ce que** l'on commande le premier courant de poche de gaz (4f) en fonction du débit nécessaire d'air de suralimentation (3e).

7. Procédé selon la revendication 1, **caractérisé en ce que** l'on divise le second courant partiel de gaz d'échappement à haute pression (4e) en un second courant de poche de gaz (4h) et un second courant principal partiel de gaz d'échappement à haute pression (4i), et **en ce que** l'on commande le second courant de poche de gaz (4h) et/ou le second courant principal partiel de gaz d'échappement à haute pression (4i) en fonction du débit nécessaire d'air de suralimentation (3e).

8. Procédé selon la revendication 1, **caractérisé en ce que** l'on réduit le nombre de tours du rotor à cellules (8), lorsque le turbocompresseur à ondes de pression (1) fonctionne dans le second état de fonctionnement (L2), et **en ce que** l'on augmente le nombre de tours du rotor à cellules (8) lorsque le turbocompresseur à ondes de pression (1) fonctionne dans le premier état de fonctionnement (L1).

9. Dispositif de réglage d'une pression d'air de suralimentation dans un moteur à combustion interne (39) avec un turbocompresseur à ondes de pression (1), dans lequel le turbocompresseur à ondes de pression (1) comprend un rotor à cellules (8), un canal d'air d'admission (2), un canal d'air de suralimentation (3), un canal de gaz d'échappement à haute pression (4) ainsi qu'un canal d'échappement (5), dans lequel le canal d'air d'admission (2), le canal de gaz d'échappement à haute pression (4) ainsi que le canal d'air de suralimentation (3) sont disposés de telle manière que l'on puisse envoyer au rotor à cellules (8) un courant d'air frais (2c) par le canal d'air d'admission (2) et un courant de gaz d'échappement à haute pression (4c) par le canal de gaz d'échappement à haute pression (4), et que l'on puisse évacuer du rotor à cellules (8) de l'air frais comprimé par le canal d'air de suralimentation (3), dans lequel le turbocompresseur à ondes de pression (1) est configuré de telle manière que celui-ci exécute pendant un tour au moins un premier et un second cycles de compression, par le fait que le canal d'air d'admission (2) se ramifie en un premier et un second canaux partiels d'air d'admission (2a, 2b), par le fait que le canal de gaz d'échappement à haute pression (4) se ramifie en un premier et un second canaux partiels de gaz d'échappement à haute pression (4a, 4b), et par le fait que le canal d'air de suralimentation (3) est alimenté par un premier et un second canaux partiels d'air de suralimentation (3a, 3b),
**caractérisé en ce que**
- une soupape pouvant être commandée (21) est disposée dans le second canal partiel de gaz d'échappement à haute pression (4b), afin de commander le débit du courant de gaz d'échappement à haute pression (4c) s'écoulant à travers le second canal partiel de gaz d'échappement à haute pression (4b),
- un clapet anti-retour (9) est disposé dans le second canal de guidage d'air (3b), et
- il se trouve un dispositif de commande et de régulation (40), qui actionne la soupape pouvant être commandée (21) en fonction d'un objectif de charge (38), en particulier d'une pédale d'accélérateur, afin de commander ainsi le débit de l'air de suralimentation (3e) envoyé au moteur à combustion interne (39), dans lequel le turbocompresseur à ondes de pression (1) peut fonctionner dans un premier état de fonctionnement (L1), dans lequel on envoie au rotor à cellules (8) pendant le premier cycle de compression le premier courant partiel de gaz d'échappement à haute pression (4d) et on n'envoie pas de second courant partiel de gaz d'échappement à haute pression (4e) pendant le second cycle de compression, **en ce que** le turbocompresseur à ondes de pression (1) peut fonctionner dans un second état de fonctionnement (L2), dans lequel on envoie au rotor à cellules (8) aussi bien pendant le premier cycle de compression le premier courant partiel de gaz d'échappement à haute pression (4d) que pendant le second cycle de compression le second courant partiel de gaz d'échappement à haute pression (4e), et **en ce que** l'on peut commuter entre le premier et le second états de fonctionnement (L1, L2) en fonction d'une valeur d'état de fonctionnement mesurée (B) et d'une valeur de commutation de consigne prédéterminée (S) .

10. Dispositif selon la revendication 9, **caractérisé en ce que** la soupape pouvant être commandée (21) est réalisée sous la forme d'une vanne rotative.

11. Dispositif selon la revendication 10, **caractérisé en ce que** la soupape (21) comprend deux soupapes partielles, une première soupape partielle (21a) dont le canal de guidage de fluide qui suit débouche dans une poche de gaz, et une seconde soupape partielle (21b) dont le canal de guidage de fluide qui suit débouche dans un canal principal (8a) du rotor à cellules (8).
